Europäisches Patentamt

(19) European Patent Office

Office européen des brevets

(11) Publication number : **0 284 188 B1**

(12) **EUROPEAN PATENT SPECIFICATION**

(45) Date of publication of patent specification :
02.01.92 Bulletin 92/01

(51) Int. Cl.⁵ : **B60T 11/16, F16J 1/00**

(21) Application number : **88301305.4**

(22) Date of filing : **17.02.88**

(54) **Pressure cylinder piston.**

(30) Priority : **25.02.87 GB 8704429**

(43) Date of publication of application :
**28.09.88 Bulletin 88/39**

(45) Publication of the grant of the patent :
**02.01.92 Bulletin 92/01**

(84) Designated Contracting States :
**DE ES FR GB IT**

(56) References cited :
**EP-A- 0 169 560**
**GB-A- 2 051 271**
**GB-A- 2 148 434**

(73) Proprietor : **LUCAS INDUSTRIES public limited company**
**Great King Street**
**Birmingham, B19 2XF West Midlands (GB)**

(72) Inventor : **Taylor, Michael Anthony**
**46, Main Road**
**Gilwen Gwent South Wales (GB)**

(74) Representative : **Waite, Anthony William et al**
**MARKS & CLERK Alpha Tower Suffolk Street**
**Queensway**
**Birmingham B1 1TT (GB)**

## Description

This invention relates to a piston for use in a pressure cylinder, such as a master or slave cylinder primarily intended for use in a vehicle hydraulic braking system. The invention also embraces a pressure cylinder incorporating such a piston.

It is conventional practice to form a pressure cylinder piston as a one-piece body and to place an annular seal on the body, usually engaged in a corresponding peripheral groove of the body. The assembly of the seal on to the body can require deformation of the seal over a full diameter portion of the piston prior to its engagement in the groove and this can cause undesirable stretching of the seal, or other damage, leading to a possible lack of integrity of the seal, in use. Moreover, such pistons are increasingly made as integral mouldings from plastics material and with pistons of diameter significantly greater than about one inch, for example, distortion and shrinkage of the moulded material can lead to difficulties in achieving the necessary high degree of accuracy for use in hydraulic equipment.

An object of the present invention is to provide an improved pressure cylinder piston in which the aforesaid problems are minimised or avoided.

Document GB-A-2051271 discloses a piston for use in a pressure cylinder comprising a pair of separately made components interfitted to form an assembly with an annular seal engaged on a surface of one of them, the seal being retained in position between the interfitted components. According to the present invention one of the components has one of more flutes extending longitudinally between the components, each flute forming a longitudinally extending passageway in the assembly.

In a typical practical arrangement, one of the components is a sleeve and the other is a headed stem received within the sleeve with the seal surrounding the stem component and being retained between opposed surfaces of the head and sleeve.

Typically, the or each flute is formed in the sleeve and may conveniently communicate via passage means with a longitudinal passage in the stem. The provision of the flutes minimises the material required for the sleeve and the arrangement of passages ensures that any air trapped in the flutes when the piston is installed in a pressure cylinder may be expelled from the flutes and carried away during bleeding of air from the cylinder.

Retaining means may conveniently be provided acting to retain the components in assembled relationship. In one of its possible forms, the assembly may include a centre valve element retained in position by a retention device, the latter preferably serving also as said retaining means acting to retain said components in assembled relationship.

The invention will now be described, by way of example, with reference to the accompanying drawings in which :

Figure 1 is a longitudinal cross sectional view of a master cylinder embodying the piston of the invention ;

Figure 2 is an enlarged sectional view of the piston of Figure 1, and

Figure 3 is a cross section along the line 3-3 of Figure 2.

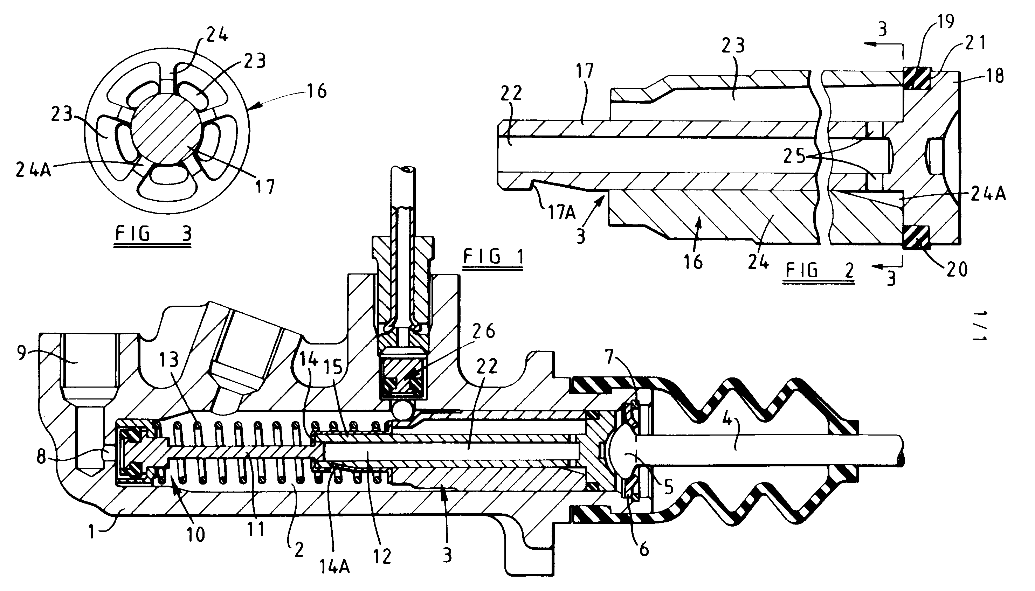

The master cylinder illustrated in Figure 1 has a body 1 having a longitudinal internal bore 2 within which slides a piston 3. The piston is actuated, in use, by a force input rod 4 engaging the outer end of the piston by way of an enlarged head 5 which co-operates with a stop ring 6 itself retained by a circlip 7 lodged in a groove of the body, in order to limit the outward movement of the rod. The body has a recuperation port 8 at the forward end of the bore 2, the port being connectable to a fluid reservoir by means of a port connection 9. The port 8 is controlled, in conventional manner, by a centre valve assembly 10 which is connected to the piston 3 by means of a stem 11 which can be accommodated in a longitudinal bore 12 of the piston during forward movement of the latter. A piston return spring 13 acts, at one of its ends, against part of the valve assembly 10 and at its other end against a cap 14 mounted on a forwardly projecting end portion 15 of the piston and acting as a retention means for the rod 11. The remaining components illustrated form no part of the present invention and will not be further described. Moreover, operation of the valve assembly 10 during working movement of the piston is also entirely conventional and will be familiar to a person skilled in the art.

The piston 3 comprises two separately made components which are interfitted to form a piston assembly, as will be more clearly appreciated from Figures 2 and 3. One of the components is an outer sleeve 16 having a central through bore which receives a stem 17 of the other component. The stem 17 terminates at one end in a head 18 which, in the assembled condition of the piston, abuts against the adjacent end of the sleeve 16. The head 18 is formed with a relatively small diameter portion 19 providing a surface for supporting a surrounding seal 20, which is trapped between a shoulder 21, formed at the junction between the head and surface 19, and the adjacent end of the sleeve 16.

The stem 17 projects beyond the end of the sleeve remote from the seal and has a longitudinal bore 22 extending from the free end thereof to the region of the head 18. This bore, in use, receives the stem 11 of the centre valve assembly 10 and the sleeve and stem are held together in their operative positions, as shown, by the retaining cap 14 for the valve stem 11. The cap is moved along the stem 17 into engagement with the adjacent end of the sleeve and a resilient turned-in tongue 14A of the cap snap-engages against a shoulder 17A of the stem as the cap reaches its final position to prevent withdrawal of the cap and thereby retain the sleeve and stem in assembled relationship.

With further reference to Figures 2 and 3, the sleeve is formed with a plurality, in this case 5, of equally angularly spaced through openings in the form of flutes 23, separated by webs 24. The flutes communicate via radial passages 25 with the longitudinal bore 22 of the stem 17. The flutes are formed during moulding of the sleeve from plastics material and serve to minimise the amount of material required for the formation of the sleeve. This is also advantageous since the relatively small bulk of the sleeve minimises the distortion occurring as a result of the moulding process and permits the sleeve to be moulded with an outer surface of the accuracy required for use as a piston.

By providing communication between the flutes 23 and the bore 22 of the stem 17 via the holes 25, air trapped within the flutes can be expelled during normal bleeding of the master cylinder. The webs 24 are cut away at 24A to permit fluid to flow around the stem and into any adjacent hole 25.

It will be understood that the piston of the invention may differ in various ways from that described above and shown in the drawings. For example, the outer surface of the piston may be of uniform diameter instead of stepped, the latter configuration being used in the described embodiment for use with a valve 26 which forms no part of the invention. Alternatively, the outer surface of the piston may be grooved or stepped in a manner different to that shown. When it is not desired to include a centre valve element in the piston, the stem 17 may be solid and an alternative form of retainer employed ; alternatively or additionally, the piston components may be held together by press-fitting and/or bonding or glueing. Although exemplified by a single piston, the invention may equally be applied to a tandem or other piston arrangement.

**Claims**

1. A piston for use in a pressure cylinder, comprising a pair of separately made components (16, 17) interfitted to form an assembly with an annular seal (19) engaged on a surface of one (17) of them, the seal being retained in position between the interfitted components, characterised in that one (16) of the components has one or more flutes (23) extending longitudinally between the components, each flute forming a longitudinally extending passageway in the assembly.

2. A piston according to Claim 1, characterised in that one component is a sleeve (16) and the other is a headed stem (17) received within the sleeve with the seal (19) surrounding the stem component and being retained between opposed surfaces of the head and sleeve.

3. A piston according to Claim 2, characterised in that each flute (23) is formed in the sleeve (16).

4. A piston according to Claim 3, characterised in that each flute (23) communicates via passage means (25) with a longitudinal passage (22) in the stem component.

5. A piston according to any one of Claims 1 to 4, characterised in that the assembly includes a centre valve element (10) retained in position by a retention device (14).

6. A piston according to any one of Claims 1 to 5, characterised in that retaining means (14) is provided acting to retain the components in assembled relationship.

7. A piston according to Claim 6, characterised in that said retention device (14) serves also as said retaining means acting to retain said components in assembled relationship.

8. A piston according to any one of the preceding claims, characterised in that the flutes are partly separated by spaced longitudinal webs (24) extending radially between the components

9. A pressure cylinder incorporating a piston according to any one of Claims 1 to 7.

**Patentansprüche**

1. Ein Kolben für den Einsatz in einem Druckzylinder, enthaltend ein Paar separat ausgeführter Bauteile (16, 17), die so miteinander verbunden sind, daß eine Einheit mit ringförmiger Dichtung (19) entsteht, die an einer Fläche eines der Bauteile (17) eingreift, wobei die Dichtung in ihrer Lage zwischen den miteinander verbundenen Bauteilen festgehalten wird, **dadurch gekennzeichnet**, daß eines (16) der Bauteile eine oder mehrere Kehlen (23) aufweist, die sich in Längsrichtung zwischen den Bauteilen erstrecken, wobei jede Kehle einen in Längsrichtung verlaufenden Durchgang in der Einheit bildet.

2. Ein Kolben nach Anspruch 1, **dadurch gekennzeichnet**, daß ein Bauteil eine Buchse (16) und das andere ein mit Kopf versehener Schaft (17) ist, der in der Büchse sitzt, wobei die Dichtung (19) das Schaftteil umgibt und zwischen einander gegenüberliegenden Flächen von Kopf und Büchse festgehalten wird.

3. Ein Kolben nach Anspruch 2, **dadurch gekennzeichnet**, daß jede Kehle (23) in der Buchse (16) ausgebildet ist.

4. Ein Kolben nach Anspruch 3, **dadurch gekennzeichnet**, daß jede Kehle (23) über Durchtritte (25) mit einem Längsdurchtritt (22) im Schaftteil kommuniziert.

5. Ein Kolben nach einem der Ansprüche 1 bis 4, **dadurch gekennzeichnet,** daß die Einheit ein zentrales Ventilelement (10) enthält, welches durch eine Haltevorrichtung (14) in seiner Lage festgehalten wird.

6. Ein Kolben nach einem der Ansprüche 1 bis 5, **dadurch gekennzeichnet**, daß Haltemittel (14) vorgesehen sind, die aufgrund ihrer Wirkung die Bauteile im Einbauverhältnis zueinander festhalten.

7. Ein Kolben nach Anspruch 6, **dadurch gekennzeichnet**, daß die genannte Haltevorrichtung (14) auch als das genannte Haltemittel dient, welches aufgrund seiner Wirkung die genannten Teile im Einbauverhältnis festhält.

8. Ein Kolben nach einem der vorherigen Ansprüche, **dadurch gekennzeichnet**, daß die Kehlen teilweise durch in Abständen angeordnete Längsstege (24) voneinander getrennt sind, die sich radial zwischen den Bauteilen erstrecken.

9. Ein Druckzylinder mit einem Kolben nach einem der Ansprüche 1 bis 7.

## Revendications

1. Piston destiné à être utilisé dans un cylindre sous pression, comprenant une paire de composants (16, 17) fabriqués séparément et emboîtés l'un dans l'autre pour former un assemblage avec un joint étanche annulaire (19) qui vient s'engrener à la surface de l'un (17) d'entre eux, le joint étanche étant maintenu en position entre les composants à emboîtement mutuel, **caractérisé en ce qu'**un (16) des composants comprend une ou plusieurs gorges (23) s'étendant longitudinalement entre ces derniers, chaque gorge formant un passage s'étendant en direction longitudinale dans l'assemblage.

2. Piston selon la revendication 1, **caractérisé en ce qu'**un composant est un manchon (16) et l'autre est une tige à tête (17), qui vient se loger au sein du manchon, le joint étanche (19) entourant le composant de tige et étant retenu entre les surfaces opposées de la tête et du manchon.

3. Piston selon la revendication 2, **caractérisé en ce que** chaque gorge (23) est façonnée dans le manchon (16).

4. Piston selon la revendication 3, **caractérisé en ce que** chaque gorge (23) communique, via un moyen de passage (25), avec un passage longitudinal (22) pratiqué dans le composant de tige.

5. Piston selon l'une quelconque des revendications 1 à 4, **caractérisé en ce que** l'assemblage englobe un élément (10) à soupape centrale, retenu en position par un dispositif de retenue (14).

6. Piston selon l'une quelconque des revendications 1 à 5, **caractérisé en ce que** le moyen de retenue (14) est prévu pour agir dans le sens d'une retenue des composants en relation assemblée.

7. Piston selon la revendication 6, **caractérisé en ce que** ledit dispositif de retenue (14) sert également, au même titre que ledit moyen de retenue, pour agir dans le sens d'une retenue desdits composants en relation assemblée.

8. Piston selon l'une quelconque des revendications précédentes, **caractérisé en ce que** les gorges sont partiellement séparées par des nervures longitudinales espacées (24) s'étendant radialement entre les composants.

9. Cylindre sous pression, dans lequel on incorpore un piston selon l'une quelconque des revendications 1 à 7.

FIG 3

FIG 1

FIG 2

EP 0 284 188 B1

1/1